Europäisches Patentamt

European Patent Office

Office européen des brevets

(11) Veröffentlichungsnummer: **0 216 144**
**B1**

(12) # EUROPÄISCHE PATENTSCHRIFT

(45) Veröffentlichungstag der Patentschrift:
26.07.89

(51) Int. Cl.⁴: **A 01 K 1/035**

(21) Anmeldenummer: **86111502.0**

(22) Anmeldetag: **20.08.86**

(54) **Futternapf-Set.**

(30) Priorität: **29.08.85 DE 3530853**

(43) Veröffentlichungstag der Anmeldung:
**01.04.87 Patentblatt 87/14**

(45) Bekanntmachung des Hinweises auf die Patenterteilung:
**26.07.89 Patentblatt 89/30**

(84) Benannte Vertragsstaaten:
**FR GB SE**

(56) Entgegenhaltungen:
**DE-U- 8 226 567**
**FR-A- 2 474 277**

(73) Patentinhaber: **Andersson, Günter, Mannesmannufer 8, D-4000 Düsseldorf 1 (DE)**
Patentinhaber: **Holz, Uwe D., Mannesmannufer 8, D-4000 Düsseldorf 1 (DE)**
Patentinhaber: **Margieciok, Frank J., Mannesmannufer 8, D-4000 Düsseldorf 1 (DE)**

(72) Erfinder: **Andersson, Günter, Mannesmannufer 8, D-4000 Düsseldorf 1 (DE)**
Erfinder: **Holz, Uwe D., Mannesmannufer 8, D-4000 Düsseldorf 1 (DE)**
Erfinder: **Margieciok, Frank J., Mannesmannufer 8, D-4000 Düsseldorf 1 (DE)**

(74) Vertreter: **Bergen, Klaus, Dipl.-Ing. et al, Patentanwälte Dr.-Ing. Reimar König Dipl.-Ing. Klaus Bergen Wilhelm-Tell-Strasse 14 Postfach 260162, D-4000 Düsseldorf 1 (DE)**

## Beschreibung

Die Erfindung betrifft einen Futternapf-Set mit einer Unterlage, die zumindest einen als Vorwölbung mit einer Vertiefung oder Rille in einer umlaufenden Schulter ausgebildeten Napfhalter aufweist, in die ein Futternapf mit mindestens zwei komplementären Rastvorsprüngen oder einer Rippe einrastet.

Ein Futternapf-Set dieser Art ist durch das DE-U-8 226 567 bekannt und bietet Haustierhaltern, die heutzutage mehr und mehr zu einer Tierfütterung mit Fertignahrung übergehen, insbesondere auch den Vorteil, daß Nachbarn oder sogar im Umgang mit Tieren ungeübte Kinder, beispielsweise während einer Abwesenheit des Tierhalters, eine ausreichende und sachgerechte Fütterung übernehmen können. Dabei bietet vor allem die Verwendung bereits portionierter Fertignahrung Vorteile, weil bei entsprechender Kennzeichnung des betreffenden Behälters Verwechslungen unwahrscheinlich sind und eine tiergerechte Menge vorgegeben ist. Nachteilig ist bei dem bekannten Futternapf-Set allerdings insbesondere das Entfernen des geleerten Futternapfes bzw. Entnehmen aus der Unterlage, denn der Futternapf wird dort in seine Unterlage eingesetzt und eingerastet. Ein Futternapf-Set mit einem in eine Unterlage eingesetzten Futternapf ist schließlich auch durch die FR-A-2 474 277 bekanntgeworden.

Der Erfindung liegt die Aufgabe zugrunde, die vorerwähnten Nachteile zu vermeiden und insbesondere ein Futternapf-Set zu schaffen, bei dem das Verbinden und Entfernen des Futternapfes mit seiner Unterlage durch einfache Handhabung möglich ist.

Diese Aufgabe wird erfindungsgemäß dadurch gelöst, daß eine umlaufende Schürze des Futternapfes eine Bodenausnehmung bildet und mit den mindestens zwei Rastvorsprüngen oder der Rippe versehen ist, die nach innen weisen und auf die in die Bodenausnehmung eingreifende Vorwölbung der Unterlage aufgesteckt ist. Die umlaufende, mit Rastvorsprüngen versehene Schürze des Futternapfes erlaubt es, den Futternapf über die Auflage zu stülpen und damit eine Art «Clip-Verbindung» zu erreichen, die ein sehr einfaches Einsetzen und Entfernen des Futternapfes mit bzw. von der Unterlage ermöglicht. Außerdem ergibt sich ein Set mit einer hinreichend festen Verbindung zwischen dem Futternapf und der Unterlage, deren Abmessungen vorzugsweise die Summe der Grundfläche mehrerer, beispielsweise von sechs Futternäpfen, übersteigen, so daß in einer Verkaufspackung eine Unterlage mit mehreren Futternäpfen untergebracht werden kann.

Unter dem Gesichtspunkt der Heimhygiene erweist es sich als besonders vorteilhaft, wenn der Futternapf und/oder die Unterlage aus tiefgezogenem Kunststoff bestehen und daher nach einmaliger Benutzung des Futternapfes und mehrmaliger Benutzung der Unterlage weggeworfen werden können. Besonders geeignet als kaufester Kunststoff für den Futternapf ist Hart-PVC, während die Unterlage vorzugsweise aus Polyester besteht. Die Unterlage besitzt vorzugsweise eine rutschfeste, beispielsweise aufgerauhte Unterseite.

Der Futternapf ist vorzugsweise mit einer auf den Rand geklebten Aluminiumfolie verschlossen.

Die Erfindung wird nachfolgend anhand eines in der Zeichnung dargestellten Ausführungsbeispiels des näheren erläutert. In der Zeichnung zeigen:

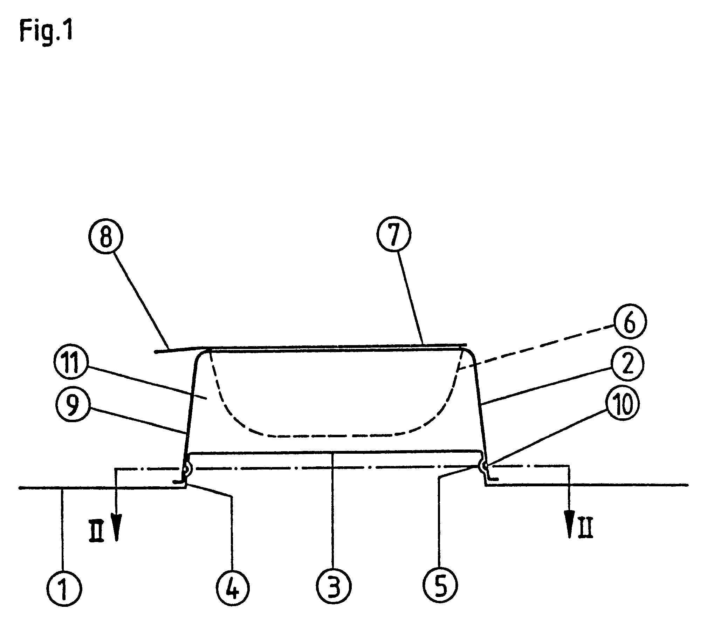

Fig. 1 eine Seitenansicht eines erfindungsgemäßen Futternapf-Sets und

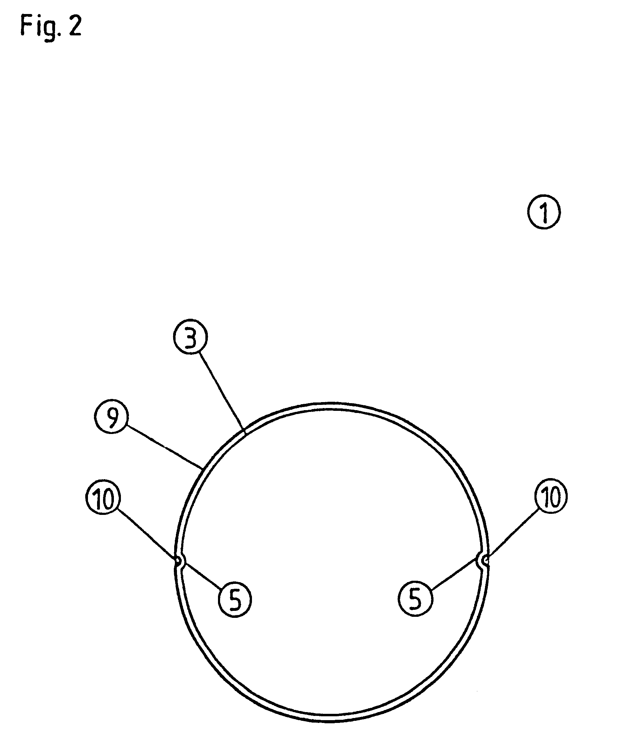

Fig. 2 einen Horizontalschnitt nach der Linie II-II in Fig. 1.

Das erfindungsgemäße Futternapf-Set besteht aus einer rechteckigen Unterlage 1 und einem Futternapf 2. Außermittig weist die Unterlage eine scheibenförmige Vorwölbung 3 auf, deren Schulter 4 mit mindestens zwei nach außen weisenden kalottenförmigen Vertiefungen 5 versehen ist.

Der Futternapf 2 besitzt eine das Futter aufnehmende Mulde 6, die mit einer üblichen Heißsiegelfolie 7, beispielsweise einer leicht abziehbaren Aluminiumfolie mit einer Zuglasche 8, verschlossen ist. Eine Schürze 9 des Futternapfs 2 ist mit mindestens zwei nach innen weisenden Rastvorsprüngen 10 versehen, die in situ in die komplementären Vertiefungen 5 oder eine nicht dargestellte umlaufende Rille in der Schulter 4 der Vorwölbung 3 eingreifen und damit Napf und Unterlage hinreichend, jedoch gleichzeitig leicht lösbar miteinander verbinden.

Eine verkaufsgerechte Packung ergibt sich, wenn die Fläche außerhalb des dargestellten Futternapfs 2 mit weiteren Futternäpfen ausgefüllt ist und sich die Unterlage mit den beispielsweise insgesamt sechs Futternäpfen in einer Schrumpffolie befindet. Nach dem Entfernen der Schrumpffolie dient die Unterlage mit dem auf die Vorwölbung 3 aufgesteckten Futternapf 2 der Fütterung, während die übrigen fünf Futternäpfe beispielsweise an einem kühlen Ort aufbewahrt werden. Nach der Fütterung wird der geleerte Futternapf 2 von der Vorwölbung 3 abgezogen und kann für die nächste Fütterung ein neuer Futternapf auf die Vorwölbung aufgesteckt werden. Insofern handelt es sich hier um Einwegfutternäpfe und eine mehrfach, normalerweise sechsmal verwendbare Unterlage.

## Patentansprüche

1. Futternapf-Set mit einer Unterlage (1), die zumindest einen als Vorwölbung (3) mit einer Vertiefung (5), oder Rille in einer umlaufenden Schulter ausgebildeten Napfhalter aufweist, in die ein Futternapf (2), mit mindestens zwei komplementären Rastvorsprüngen (10) oder einer Rippe einrastet, dadurch gekennzeichnet, daß eine umlaufende Schürze (9) des Futternapfes (2) eine Bodenausnehmung (11) bildet, mit den mindestens zwei Rastvorsprüngen (10) oder der Rippe versehen ist, die nach innen weisen, und auf die in die Bodenausnehmung (10) eingreifende Vorwölbung (3) der Unterlage (1) aufgesteckt ist.

2. Futternapf-Set nach Anspruch 1, dadurch gekennzeichnet, daß die Abmesungen der Unterlage (1) größer als die Summe der Grundflächen mehrerer Futternäpfe (2) sind.

3. Futternapf-Set nach Anspruch 1 oder 2, dadurch gekennzeichnet, daß die Unterlage (1) eine rutschfeste Unterseite aufweist.

4. Futternapf-Set nach einem oder mehreren der Ansprüche 1 bis 3, dadurch gekennzeichnet, daß der Futternapf (2) und/oder die Unterlage (1) aus tiefgezogenem Kunststoff bestehen.

5. Futternapf-Set nach einem oder mehreren der Ansprüche 1 bis 4, dadurch gekennzeichnet, daß der Futternapf (2) verschlossen ist.

6. Futternapf-Set nach einem oder mehreren der Ansprüche 1 bis 5, dadurch gekennzeichnet, daß der Futternapf (2) aus Hart-PVC und der Untersatz (1) aus Polystyrol besteht.

## Claims

1. A feeding dish set having a base (1) which at least has one dish holder, formed as a raised dome (3) with a depression (5) or groove in a circumferential shoulder, in which a feeding dish (2) having at least two complementary locking projections (10) or a rib is engaged, characterised in that a circumferential skirt (9) of the feeding dish (2) forms a bottom recess (11) which is provided with the at least two lock projections (10) or the rib which point inwardly and which is seated on the dome (3) of the base (1) with the dome engaging in the bottom recess (11).

2. A feeding dish set according to claim 1, characterised in that the dimensions of the base (1) are larger than the surface areas of several feeding dishes (2).

3. A feeding dish set according to claim 1 or claim 2, characterised in that the base (1) has a nonslip underside.

4. A feeding dish set according to any one or more of claims 1 to 3, characterised in that the feeding dish (2) and/or the base (1) consist of deepdrawn plastics material.

5. A feeding dish set according to any one or more claims 1 to 4, characterised in that the feeding dish (2) is sealed.

6. A feeding dish set according to any one or more of claims 1 to 5, characterised in that the feeding dish (2) consists of hard polyvinyl chloride and the base (1) consists of polystyrene.

## Revendications

1. Dispositif pour auge à fourrage comprenant une base (1) qui comporte au moins un bourrelet (3) constituant un support d'auge et comportant une partie rentrante (5) ou une rainure qui est ménagée dans un épaulement périphérique et dans laquelle une auge à fourrage (2) s'engage par au moins deux parties saillantes correspondantes (10) ou par une nervure, caractérisé en ce qu'une paroi périphérique constituant le tablier (9) de l'auge à fourrage (2) forme un évidement (11), comporte au moins des deux parties saillantes d'engagement (10) ou la nervure, qui sont dirigées vers l'intérieur, et s'enfonce sur le bourrelet (3) de la base (1) qui s'engage dans l'évidement (10).

2. Dispositif pour auge à fourrage selon la revendication 1, caractérisé en ce que les dimensions de la base (1) supérieures à la somme des surfaces en plan de plusieurs auges à fourrage (2).

3. Dispositif pour auge à fourrage selon l'une des revendications 1 ou 2, caractérisé en ce que la base (1) comporte une surface inférieure antidérapante.

4. Dispositif pour auge à fourrage selon une ou plusieurs des revendications 1 à 3, caractérisé en ce que l'auge à fourrage (2) et/ou la base (1) sont en matière plastique emboutie.

5. Dispositif pour auge à fourrage selon une ou plusieurs des revendications 1 à 4, caractérisé en ce que l'auge à fourrage (2) est fermée.

6. Dispositif pour auge à fourrage selon une ou plusieurs des revendications 1 à 5, caractérisé en ce que l'auge à fourrage (2) est constituée par du chlorure de polyvinyle dur et que la base (1) est constituée par du polystyrol.

# Fig.1

Fig. 2